# EUROPEAN PATENT SPECIFICATION

(11) **EP 2 141 463 B1**
(45) Date of publication and mention of the grant of the patent: **16.02.2011**
(21) Application number: 09161190.5
(22) Date of filing: 27.05.2009
(51) Int. Cl.: G01F 1/66

(54) **Ultrasound flow meter with transducer cartridge mounting surface and sealing means**
Ultraschallflussmesser mit Wandlerkartuschenmontierfläche
Débitmètre à ultrasons avec surface de montage de cartouche de transducteur

(30) Priority: 02.07.2008 EP 08159486
(43) Date of publication of application: 06.01.2010
(73) Proprietor: KAMSTRUP A/S, 8660 Skanderborg (DK)
(72) Inventor: Borring, Peter Nordlund, DK-7100, Vejle (DK)
(74) Representative: Plougmann & Vingtoft A/S

(56) References cited:
- DE-A1- 4 443 415
- US-A- 5 515 733
- US-A1- 2003 097 879
- US-B1- 6 647 804

## Description

### FIELD OF THE INVENTION

The invention relates to an ultrasound flow meter and in particular to an ultrasound flow meter with a transducer cartridge mounting surface.

### BACKGROUND OF THE INVENTION

Ultrasound flow meters for ultrasonic measurement of fluid flow are e.g. used for measuring the flow of gases and liquids, and in particular liquids such as water.

In some applications the flow meters are used for relatively hot fluids under a relatively high pressure. The temperature of the fluids may be in an area of until 150-180°C and under typical working conditions the pressure in the fluid is typically 4-8*10⁵ Pa. Though, pressure bursts may occur which provides a pressure of more than 100*10⁵ Pa in an ultrasound flow meter mounted in a piping system, i.e. pressure bursts with a pressure ranging from the pressure under typical working conditions and to a pressure in the fluid of more than 100*10⁵ Pa (100 bar) may occur. Similarly the temperature may vary from 0°C to the temperature area of until 150-180°C.

In piping systems an important issue is fluid tightness of the system under all present conditions. Furthermore it is of outmost Importance for a piping system including an ultrasound flow meter that the system and hereby the ultrasound flow meter continues to be fluid tight, year after year. A flow meter which leaks and therefore must be repaired or exchanged is highly disadvantageous. Furthermore, a piping system leaking a fluid with a temperature well above 100°C may become dangerous to any person present near the piping system.
These issues must be addressed while also considering factors such as production and assembling cost of the flow meter.

The inventor of the present invention has appreciated that an improved ultrasound flow meter is of benefit, and has in consequence devised the present invention.

### SUMMARY OF THE INVENTION

It may be seen as an object of the present invention to provide an improved flow meter for ultrasonic measurement of fluid flow. Preferably, the invention alleviates, mitigates or eliminates one or more of the above or other disadvantages singly or in any combination.

When an ultrasound flow meter is provided in accordance with the claims and in particular in accordance with the present main claim, a flow meter is provided with a possible advantage that the ultrasound transducer is more resistant to high temperatures and/or high pressures and/or changing temperature and/or changing pressure without leaking. Possibly an advantage hereby may alternatively or additionally be that the use of a rather flexible sealing means, such as a relatively soft rubber O-ring may be avoided when sealing the ultrasound cartridge towards the flow duct. While hereby still or also being able to provide a fluid tight flow duct which is fluid tight under high and/or varying pressures and/or under relatively high and/or changing temperatures year after year. Especially, when the flow meter is as described herein and the transducer cartridge is pre-stressed towards the sealing between the transducer cartridge and the mounting surface with a surface pressure on the sealing means of at least 2 MPa, a possible advantage is that a consumption flow meter which is more resistant to high temperatures and/or high pressures and/or changing temperature and/or changing pressure without leaking is provided.

US 5,515,733 discloses an ultrasonic transducer system with crosstalk isolation. An acoustic isolation is provided by two O-rings serving to provide a resilient connection between an ultrasound transducer and the solid body housing.

DE 44 43 415 A1 discloses an ultrasonic flow meter with a ceramic material used to provide an acoustic decoupling of ultrasound transducers.

US 2003/097879 A1 discloses an ultrasonic flow meter with an ultrasound waveguide serving to transfer and receive ultrasound waves to and from an ultrasound transducer. A seal is positioned between the ultrasound waveguide and a measuring tube.

US 6,647,804 discloses a flow measurement system based on acoustic Doppler measurements. Transducers are coupled to an acoustic refractive lens which is sealed in the opening.

When the flow duct and the one or more mounting surfaces at the one or more mounting holes are provided in one monolithic duct element, a possible advantage is that a number of possible leaking connections are reduced.

When the transducer cartridge is mountable from an inside of the flow duct on the mounting surface, a possible advantage is that in this way there is no need for providing the cartridge in a plurality of parts to be connected with each other upon mounting the cartridge. Though, it is still a possibility to provide the transducer cartridge in two parts - one part which is mounted from an outside of the flow duct and one part such as a nut member which is attached to the transducer cartridge from an inside of the flow duct. Either way the one or more transducer cartridges are connectable to the flow duct so as to form part of a fluid tight flow duct.

In accordance with a second aspect of the invention there is provided a method of providing a fluid tight consumption flow meter.

In general by writing that 'it is an advantage' by the present invention and referring to an advantage, it must be understood that this advantage may be seen as a possible advantage provided by the invention, but it may also be understood that the invention is particularly, but not exclusively, advantageous for obtaining the described advantage.

In general the various aspects and advantages of the invention may be combined and coupled in any way possible within the scope of the invention.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 is a perspective 3D view of an ultrasound flow meter,
FIG. 2 is a cross-section of the ultrasound flow meter,
FIG. 3 is a cross-section of an ultrasound transducer cartridge mounted in a flow duct element,
FIG. 4 shows an ultrasound transducer cartridge and a cross-section thereof, and
FIG. 5.1-5.3 illustrate possible forms of the sealing means usable for the purpose of providing a fluid tight consumption ultrasound flow meter.

### DESCRIPTION OF EMBODIMENTS

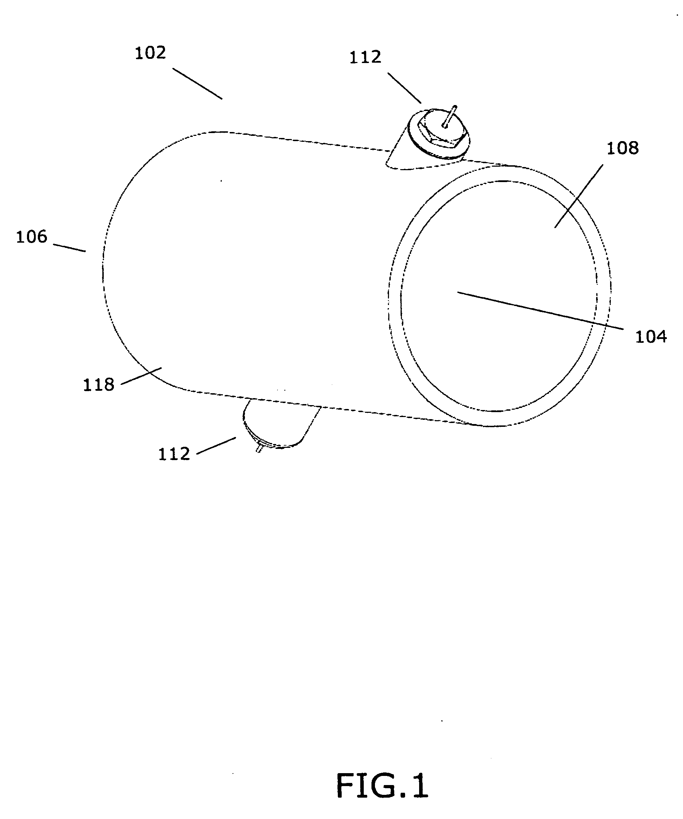

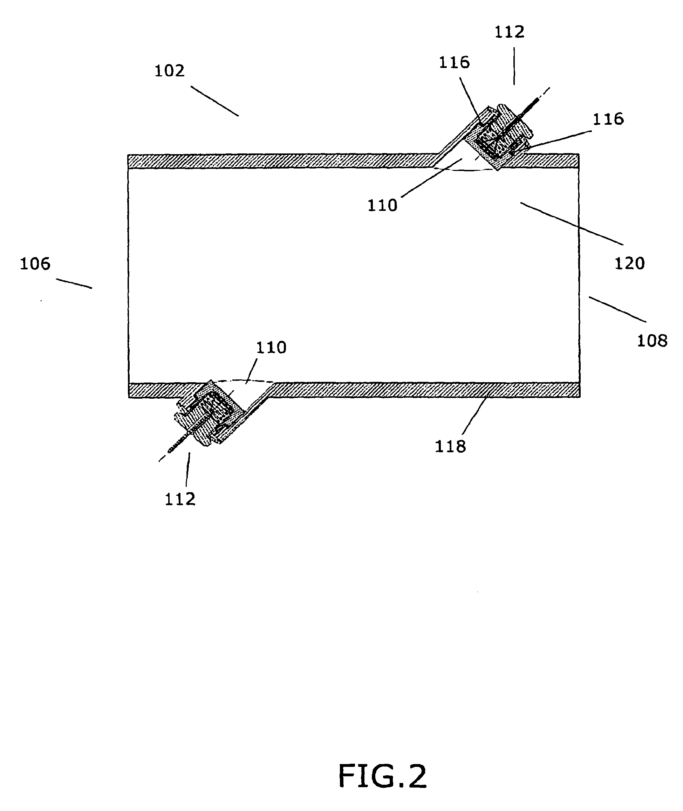

An embodiment of the invention is illustrated in FIG. 1 - 3. In FIG. 1 a ultrasound flow meter 102 for ultrasonic measurement of fluid flow with a flow duct 104 with a fluid inlet 106 and a fluid outlet 108 is shown. A flow of fluid within the flow duct creates a pressure within the flow duct. As seen in FIG. 2 the flow duct furthermore comprises one or more mounting holes 110, in the present embodiment two mounting holes, each hole is for mounting an ultrasound transducer cartridge 112. The ultrasound cartridges are arranged in the mounting holes so as to enable a measurement of the fluid flow from the inlet to the outlet in the flow duct. Furthermore the ultrasound flow meter is provided with a sealing means 114 provided in each of the mounting holes and the flow duct is provided with a mounting surface 116 at each of the mounting holes.

The mounting surface 116, which may alternatively be called a recess on an inside of the mounting hole, is dimensioned to receive a transducer cartridge, and the transducer cartridge is mounted on the mounting surface so as to use the pressure within the flow duct for pressing the transducer cartridge toward the sealing means, the sealing means hereby being pressed towards the mounting surface. It can be seen that, in the present embodiment this is provided in that at least a part of the ultrasound transducer cartridge 112 has a dimension 130 which is larger than at least a part of a dimension 128 of the mounting hole 110. In the present embodiment the cartridge has a larger diameter 130 in a part 132 of the cartridge than the diameter 128 of the mounting hole 110.

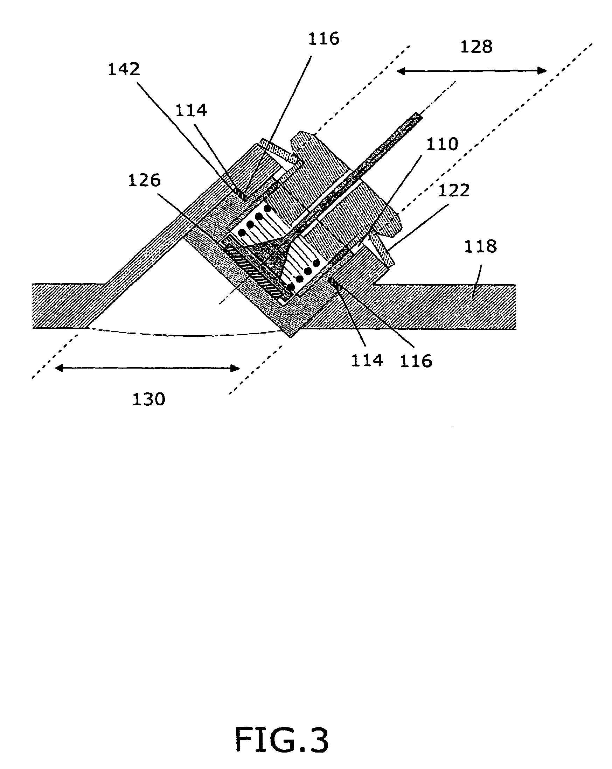

From FIG. 2 and 3 it is shown that the mounting surface is provided inside the flow duct and furthermore that the transducer cartridge is mounted on an inside of the flow duct on the mounting surface. It follows from FIG. 1 and 2 that the flow duct and the mounting surfaces at the mounting holes are provided in one monolithic duct element 118. Particularly it can be seen that the transducer cartridge is mountable, and in the embodiment shown mounted, from an inside 120 of the flow duct on the mounting surface 116.

The transducer cartridges are connected to the flow duct in order to form part of a fluid tight flow duct.

In FIG. 3 the sealing means 114 provided between the transducer cartridge 112 and the mounting surface is shown in detail. The sealing is made from a heat resistant fibre material. Alternatively the sealing material can be made from a relatively hard heat resistant rubber material or from a metal such as copper. The sealing means may be made from a hard material. The hardness of the sealing material is preferably adapted so that a compression of the sealing, when the sealing is provided between the transducer cartridge and the mounting surface, and when the transducer cartridge is biased or pre-stressed towards the mounting surface, is between approximately 0.1% and less than 10% of a material thickness of the sealing. The compression is preferably in the interval between 2 and 5% of the material thickness of the sealing. The lower limit is primarily provided in order for the sealing to adapt to a roughness and/or minor differences in a slope of the mounting surface 116 and a bearing surface 142.

When the hardness and the pre-stressing etc of the sealing and the construction of the flow meter is as described, it is envisaged that the sealing seals against fluid leaking from this consumption ultrasound flow meter 102. Any usable acoustic decoupling of ultrasound frequencies, i.e. frequencies larger than 20 kHz, if at all needed, between the transducer and the flow meter housing is preferably provided elsewhere than in the sealing 114, such as electronically.

A consumption meter is a precision instrument normally used to bill a customer consuming a measured flow of fluid, such as in a flow of water in a ultrasound water flow meter.

From figure 3 it also follows that the transducer cartridge is partly pre-stressed towards the mounting surface by a flexible retention means 122. The retention means is as shown in the embodiment mounted from outside the flow duct. In the shown embodiment the retention means is provided as a spring 122. The pre-stressing of the sealing means is e.g. provided by a mechanical construction being assembled and mechanically pre-stressed by assembling the parts and e.g. applying torque to one or more threaded assembling elements.

The sealing has a surface area of the surface towards the mounting surface 116 or towards the bearing surface 142. The pre-stressing pressure on the surface area of the sealing is at least 2 MPa, i.e. 2 × 10⁶ Pa, i.e. at least 20 bar.

It can be seen that the seating means 114 in a sealing area comprising the mounting surface 116 is a part bridging the flow duct and the transducer cartridge. The mounting surface 116 of the flow duct and the bearing surface 142 of the cartridge are both substantially plane and it can be seen that the whole of the sealing means is situated between the substantially plane bearing surface 116 on the transducer cartridge and the substantially plane mounting surface 142 on the flow duct. Alternatively at least a main part of the sealing is provided between the two surfaces 142 and 116 and possibly a minor indentation is provided in one or both of the surfaces.

It follows from the figure and the description herein that any pressure from the fluid will, if at all possible, press the transducer cartridge even more tightly towards the sealing means 114. Any fluid pressure, and especially fluid pressure bursts, in the fluid will at least not provide a pressure on a complete surface of the transducer cartridge towards the fluid possibly making the transducer cartridge move away from is mounting surface 116. It follows from the figures that the transducer cartridge is not directly locked to the duct element 118 in the direction 140 of the fluid pressure. On the contrary, it follows that the transducer cartridge is able to increase the pressure on the sealing means when any increased fluid pressure is provided in the flow duct.

When the necessary torque is applied to the nut of the transducer cartridge 112, in order to create the pre-stressing surface pressure of at least 2 MPa on the sealing surface, the flexible retention means, or spring 122, will be forced down from what is shown or even be completely flush with an outer surface of the duct element.

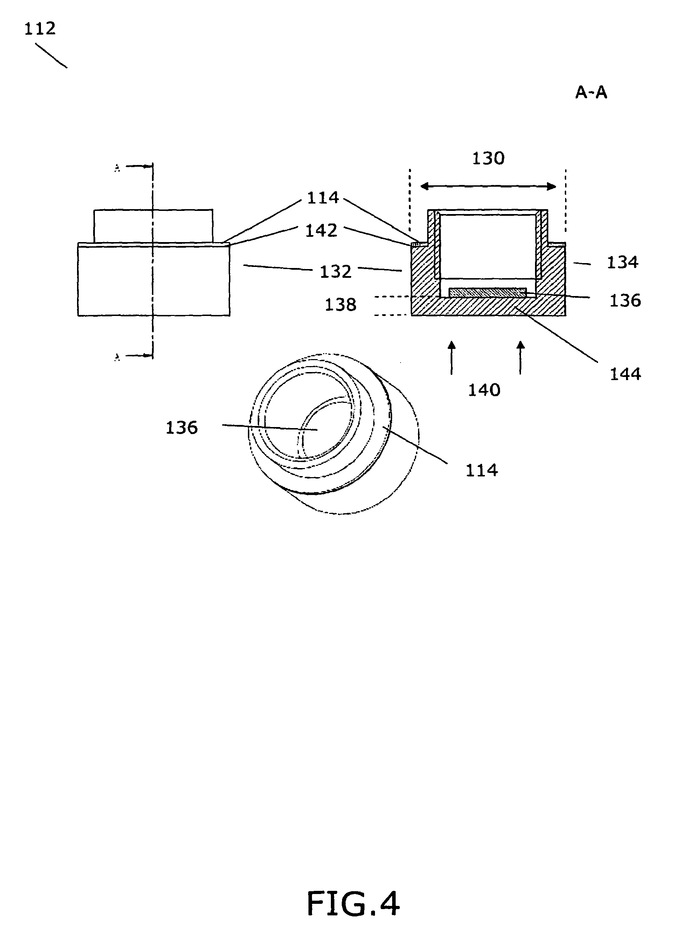

FIG. 4 shows the ultrasound transducer cartridge 112 in a side view, a perspective view and in a cross-sectional view. In the figure a cartridge housing 134 is mounted with a piezoelectric element 136 on an inside of the cartridge housing as shown. The cartridge housing 134 is provided with a matching layer 144 with a thickness 138 in the part of the cartridge housing 134 where the piezoelectric element is mounted. A direction of the compression stress given by a pressure of a fluid, when the ultrasound cartridge is mounted as part of a fluid tight flow duct, is shown with the arrows 140. In the figure the cartridge 112 has the diameter 130 in the part 132. The figure shows the bearing surface 142 of the transducer cartridge which surface is provided for mounting the sealing means 114 (shown in FIG. 2 and 3).

It follows from the figures that the sealing means 114 has a rectangular cross-section. The rectangular cross-section is fitted to the substantially plane surfaces 116 and 142. The rectangular cross-section of the sealing means, when seen perpendicular to a sealing surface, may be a reason for referring to the sealing means as a gasket and not as an O-ring having a circular cross section.

Other possible forms of the sealing means 114 which are useable for the purpose of providing a fluid tight consumption ultrasound flow meter are shown in FIG. 5.1-5.3.

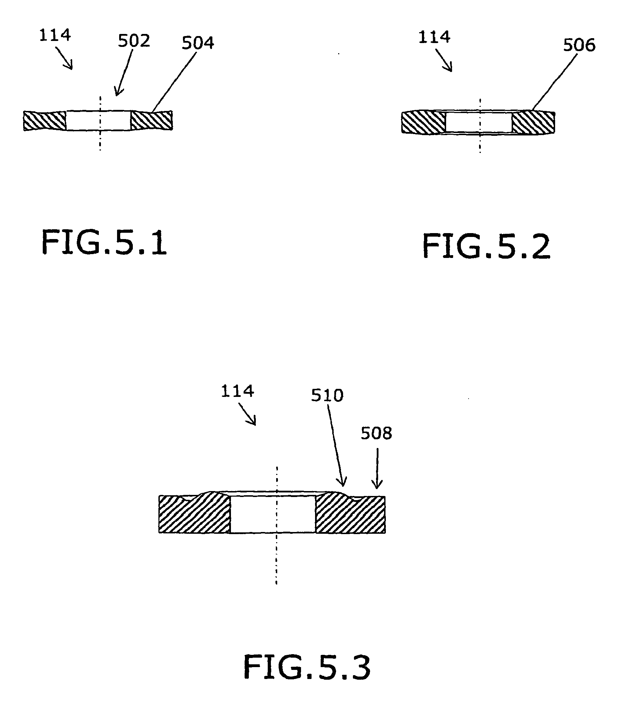

FIG. 5.1 shows a cross-section of a sealing means 114 with a through going hole 502 in the middle of the sealing, for receiving the transducer cartridge, and where sealing surfaces are provided with one or more slightly concave sealing surfaces 504, in the example two concave surfaces are shown.

FIG. 5.2 shows a sealing means 114 with a sealing surface which is provided with one or more slightly convex sealing surfaces 506, in the example two convex surfaces are provided, one on each side of the sealing means 114.

FIG. 5.3 shows a combination sealing means having at least one side as shown with sealing portions 508 with a substantially rectangular shape or cross-section and portion which are rounded 510, i.e. convex or concave. Generally the sealing means disclosed herein has a sealing surface which seen in a cross-section, has at least a portion which is slightly concave, slightly convex, substantially flat 508, substantially plane, square 508 or rectangular.

The described sealing means are envisaged to be positioned between and bridging the substantially plane mounting surface 116 of the flow duct and the substantially plane bearing surface 142 of the cartridge. Alternatively at least a main part of the sealing means 114 is provided between the two surfaces 142 and 116 and possibly a minor indentation is provided in one or both of the surfaces 116, 142.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

In summary it is herein disclosed that in order e.g. to provide an ultrasound flow meter which is more resistant to high temperatures and/or changing temperature without leaking there is provided an ultrasound transducer with a flow duct 104 comprising one or more mounting holes 110 for mounting one or more transducer cartridges 112, and one or more transducer cartridges arranged in the one or more mounting holes, and where the flow duct is provided with a mounting surface 116 at each of one or more of the mounting holes, and the mounting surface is dimensioned to receive a transducer cartridge, and the transducer cartridge is mountable on the mounting surface so as to use the pressure within the flow duct for pressing the transducer cartridge towards the sealing means, a sealing means 114 hereby being pressed towards the mounting surface.

## Claims

1. An ultrasound flow meter (102) for ultrasonic measurement of fluid flow, the ultrasound flow meter comprising
- a flow duct (104) for receiving a flow of fluid, the flow duct comprises a fluid inlet (106) and a fluid outlet (108), and wherein the flow of fluid within the flow duct creates a pressure within the flow duct, the flow duct furthermore comprising one or more mounting holes (110) for mounting one or more transducer cartridges (112),
- one or more transducer cartridges arranged in the one or more mounting holes so as to enable a measurement of the fluid flow from the inlet to the outlet in the flow duct, and
- a sealing means (114) provided in the one or more mounting holes,
wherein the flow duct is provided with a mounting surface (116) at each of one or more of the mounting holes, the mounting surface being dimensioned to receive a transducer cartridge,
**characterized in that**
the transducer cartridge is mountable on the mounting surface so that the pressure within the flow duct presses the transducer cartridge towards the sealing means (114), the sealing means hereby being pressed towards the mounting surface, and wherein the transducer cartridge is pre-stressed towards the sealing between the transducer cartridge and the mounting surface by a flexible retention means (122).

2. The ultrasound flow meter according to claim 1, wherein the transducer cartridge is pre-stressed towards the sealing between the transducer cartridge and the mounting surface with a surface pressure on the sealing means of at least 2 MPa.

3. An ultrasound flow meter according to any of the preceding claims, wherein the mounting surface is provided inside the flow duct.

4. An ultrasound flow meter according to any of the preceding claims, wherein the transducer cartridge is mounted on an inside of the flow duct on the mounting surface.

5. An ultrasound flow meter according to any of the preceding claims, wherein the flow duct and the one or more mounting surfaces at the one or more mounting holes are provided in one monolithic duct element (118).

6. An ultrasound flow meter according to any of the preceding claims, wherein the transducer cartridge is mountable from an inside (120) of the flow duct on the mounting surface (116).

7. An ultrasound flow meter according to any of the preceding claims, wherein the one or more transducer cartridges are connected to the flow duct so as to form part of a fluid tight flow duct.

8. An ultrasound flow meter according to any of the preceding claims, wherein the hardness of the sealing means (114) is so that the material thickness of the sealing means is compressed in the interval from 0.1% to 10%, when the transducer cartridge is pre-stressed towards the sealing surface.

9. An ultrasound flow meter according to any of the preceding claims, wherein the sealing means (114) is made from a heat resistant fibre material, a heat resistant rubber material, or from a metal.

10. An ultrasound flow meter according to any of the preceding claims, wherein the sealing means (114) in a sealing area is a part bridging the flow duct (104) and the transducer cartridge (112).

11. An ultrasound flow meter according to any of the preceding claims, wherein a main part of the sealing means (114) is situated between a substantially plane surface (142) on the transducer cartridge (112) and a substantially plane mounting surface (116) on the flow duct (104).

12. An ultrasound flow meter according to any of the preceding claims, wherein a sealing between the flow duct (104) and the one or more transducer cartridges (112) only consist of a sealing type as described in claims 1-12.

13. An ultrasound flow meter according to any of the preceding claims, wherein the sealing means (114) has a sealing surface which seen in a cross-section has at least a portion which is comprised in a group of: slightly concave, slightly convex, substantially flat, substantially plane, square or rectangular.

14. A method of providing a fluid tight consumption flow meter, the flow meter comprising
- a flow duct (104) for receiving a flow of fluid, the flow duct comprises a fluid inlet (106) and a fluid outlet (108), and wherein the flow of fluid within the flow duct creates a pressure within the flow duct, the flow duct furthermore comprising one or more mounting holes (110) for mounting one or more transducer cartridges (112),
- one or more transducer cartridges arranged in the one or more mounting holes so as to enable a measurement of the fluid flow from the fluid inlet (106) to the fluid outlet (108) in the flow duct,
- a sealing means (114) provided in the one or more mounting holes, wherein the flow duct is provided with a mounting surface (116) at each of one or more of the mounting holes, wherein the method comprising
- mounting the sealing means on the mounting surface (116) or on a bearing surface (142) of the transducer cartridge,
- mounting the transducer cartridge (112) so that any pressure within the flow duct presses the transducer cartridge towards the sealing means, the sealing means hereby being pressed towards the mounting surface, and
- pre-stressing the transducer cartridge towards the sealing means and the mounting surface by a flexible retention means (122).

## Patentansprüche

1. Ultraschallströmungsmesser (102) für Ultraschallmessungen eines Fluidstroms, wobei der Ultraschallströmungsmesser umfasst
- einen Strömungskanal (104) zur Aufnahme eines Fluidstroms, wobei der Strömungskanal einen Strömungseingang (106) und einen Strömungsausgang (108) umfasst und wobei der Fluidstrom innerhalb des Strömungskanals einen Druck im Strömungskanal erzeugt, wobei der Strömungskanal weiterhin eine oder mehrere Montageöffnungen (110) zur Montage einer oder mehrerer Wandlerpatronen (112) umfasst,
- eine oder mehrere Wandlerpatronen, die in der einen oder den mehreren Montageöffnungen angeordnet sind, um eine Messung des Fluidstroms im Strömungskanal vom Eingang zum Ausgang zu ermöglichen, und
- ein Abdichtmittel (114), das an der einen oder den mehreren Montageöffnungen vorgesehen ist,
wobei der Strömungskanal mit einer Montagefläche (116) an jeder der einen oder mehreren Montageöffnungen versehen ist, wobei die Montagefläche derart ausgelegt ist, dass sie eine Wandlerpatrone aufnehmen kann,
**dadurch gekennzeichnet, dass**
die Wandlerpatrone derart an der Montagefläche montierbar ist, dass der Druck im Strömungskanal die Wandlerpatrone gegen das Abdichtmittel (114) drückt, wobei das Abdichtmittel **dadurch** gegen die Montagefläche gedrückt wird, und wobei die Wandlerpatrone gegen die Abdichtung zwischen der Wandlerpatrone und der Montagefläche mithilfe eines flexiblen Rückhaltemittels (122) vorgespannt ist.

2. Ultraschallströmungsmesser nach Anspruch 1, wobei die Wandlerpatrone gegen die Abdichtung zwischen der Wandlerpatrone und der Montagefläche mit einem Oberflächendruck am Abdichtmittel von wenigstens 2 MPa vorgespannt ist.

3. Ultraschallströmungsmesser nach einem der vorhergehenden Ansprüche, wobei die Montagefläche im Inneren des Strömungskanals vorgesehen ist.

4. Ultraschallströmungsmesser nach einem der vorhergehenden Ansprüche, wobei die Wandlerpatrone an einer Innenseite des Strömungskanals an der Montagefläche montiert ist.

5. Ultraschallströmungsmesser nach einem der vorhergehenden Ansprüche, wobei der Strömungskanal und die eine oder mehreren Montageflächen an der einen oder den mehreren Montageöffnungen mit einem monolithischen Kanalelement (118) versehen sind.

6. Ultraschallströmungsmesser nach einem der vorhergehenden Ansprüche, wobei die Wandlerpatrone von einer Innenseite (120) des Strömungskanals an der Montagefläche (116) montierbar ist.

7. Ultraschallströmungsmesser nach einem der vorhergehenden Ansprüche, wobei die eine oder mehreren Wandlerpatronen derart mit dem Strömungskanal verbunden sind, dass sie einen Teil eines fluiddichten Strömungskanals bilden.

8. Ultraschallströmungsmesser nach einem der vorhergehenden Ansprüche, wobei die Härte des Abdichtmittels (114) derart ist, dass die Materialdicke des Abdichtmittels im Bereich von 0,1 % bis 10 % komprimiert wird, wenn die Wandlerpatrone gegen die Abdichtfläche vorgespannt ist.

9. Ultraschallströmungsmesser nach einem der vorhergehenden Ansprüche, wobei das Abdichtmittel (114) aus einem wärmebeständigen Fasermaterial, einem wärmebeständigen Gummimaterial oder einem Metall hergestellt ist.

10. Ultraschallströmungsmesser nach einem der vorhergehenden Ansprüche, wobei das Abdichtmittel (114) in einem Abdichtbereich ein Teil ist, das den Strömungskanal (104) und die Wandlerpatrone (112) überbrückt.

11. Ultraschallströmungsmesser nach einem der vorhergehenden Ansprüche, wobei ein Hauptteil des Abdichtmittels (114) zwischen einer im Wesentlichen planen Fläche (142) an der Wandlerpatrone (112) und einer im Wesentlichen planen Montagefläche (116) am Strömungskanal (104) angeordnet ist.

12. Ultraschallströmungsmesser nach einem der vorhergehenden Ansprüche, wobei eine Abdichtung zwischen dem Strömungskanal (104) und der einen oder den mehreren Wandlerpatronen (112) ausschließlich aus einem Abdichtungstyp nach Anspruch 1-12 besteht.

13. Ultraschallströmungsmesser nach einem der vorhergehenden Ansprüche, wobei das Abdichtmittel (114) eine Abdichtfläche aufweist, die im Querschnitt gesehen wenigstens einen Abschnitt aufweist, der der folgenden Gruppe angehört: leicht konkav, leicht konvex, im Wesentlichen flach, im Wesentlichen plan, quadratisch oder rechteckig.

14. Verfahren zur Bereitstellung eines fluiddichten Verbrauchsströmungsmessers, wobei der Strömungsmesser umfasst
- einen Strömungskanal (104) zur Aufnahme eines Fluidstroms, wobei der Strömungskanal einen Strömungseingang (106) und einen Strömungsausgang (108) umfasst und wobei der Fluidstrom innerhalb des Strömungskanals einen Druck im Strömungskanal erzeugt, wobei der Strömungskanal weiterhin eine oder mehrere Montageöffnungen (110) zur Montage einer oder mehrerer Wandlerpatronen (112) umfasst,
- eine oder mehrere Wandlerpatronen, die in der einen oder den mehreren Montageöffnungen angeordnet sind, um eine Messung des Fluidstroms im Strömungskanal vom Eingang zum Ausgang zu ermöglichen, und
- ein Abdichtmittel (114), das an der einen oder den mehreren Montageöffnungen vorgesehen ist, wobei der Strömungskanal mit einer Montagefläche (116) an jeder der einen oder mehreren Montageöffnungen versehen ist, wobei das Verfahren umfasst
- Montieren des Abdichtmittels an der Montagefläche (116) oder einer tragenden Fläche (142) der Wandlerpatrone,
- Montieren der Wandlerpatrone (112), sodass jeder Druck im Strömungskanal die Wandlerpatrone gegen das Abdichtmittel drückt, wobei das Abdichtmittel **dadurch** gegen die Montagefläche gedrückt wird, und
- Vorspannen der Wandlerpatrone gegen das Abdichtmittel und die Montagefläche mithilfe eines flexiblen Rückhaltemittels (122).

## Revendications

1. Débitmètre à ultrasons (102) pour réaliser des mesures par ultrasons d'un écoulement de fluide, le débitmètre à ultrasons comprenant
- une conduite d'écoulement (104) destinée à recevoir un écoulement de fluide, la conduite d'écoulement comprenant une entrée de fluide (106) et une sortie de fluide (108), et où l'écoulement de fluide dans la conduite d'écoulement crée une pression dans la conduite d'écoulement, la conduite d'écoulement comprenant en outre un ou plusieurs trous de montage (110) pour monter une ou plusieurs cartouches de transducteur (112),
- une ou plusieurs cartouches de transducteur placées dans les un ou plusieurs trous de montage de manière à permettre une mesure de l'écoulement de fluide entre l'entrée et la sortie de la conduite d'écoulement, et
- un moyen d'étanchéité (114) situé dans les un ou plusieurs trous de montage,
où la conduite d'écoulement est munie d'une surface de montage (116) au niveau de chacun des un ou plusieurs trous de montage, la surface de montage étant dimensionnée pour recevoir une cartouche de transducteur,
**caractérisé en ce que**
la cartouche de transducteur peut être montée sur la surface de montage de manière à ce que la pression dans la conduite d'écoulement presse la cartouche de transducteur vers le moyen d'étanchéité (114), le moyen d'étanchéité étant ainsi pressé vers la surface de montage, et où la cartouche de transducteur est précontrainte vers le système d'étanchéité situé entre la cartouche de transducteur et la surface de montage par un moyen de retenue souple (122).

2. Le débitmètre à ultrasons selon la revendication 1, où la cartouche de transducteur est précontrainte vers le système d'étanchéité situé entre la cartouche de transducteur et la surface de montage, une pression de surface d'au moins 2 MPa étant exercée sur le moyen d'étanchéité.

3. Débitmètre à ultrasons selon l'une quelconque des revendications précédentes, où la surface de montage est située à l'intérieur de la conduite d'écoulement.

4. Débitmètre à ultrasons selon l'une quelconque des revendications précédentes, où la cartouche de transducteur est montée sur une face interne de la conduite d'écoulement sur la surface de montage.

5. Débitmètre à ultrasons selon l'une quelconque des revendications précédentes, où la conduite d'écoulement et les une ou plusieurs surfaces de montage au niveau des un ou plusieurs trous de montage sont situées dans un élément de conduite monolithique (118).

6. Débitmètre à ultrasons selon l'une quelconque des revendications précédentes, où la cartouche de transducteur peut être montée depuis une face interne (120) de la conduite d'écoulement sur la surface de montage (116).

7. Débitmètre à ultrasons selon l'une quelconque des revendications précédentes, où les une ou plusieurs cartouches de transducteur sont raccordées à la conduite d'écoulement de manière à faire partie d'une conduite d'écoulement étanche aux fluides.

8. Débitmètre à ultrasons selon l'une quelconque des revendications précédentes, où la dureté du moyen d'étanchéité (114) est telle que l'épaisseur du matériau du moyen d'étanchéité est comprimée de 0,1 % à 10 % quand la cartouche de transducteur est précontrainte vers la surface d'étanchéité.

9. Débitmètre à ultrasons selon l'une quelconque des revendications précédentes, où le moyen d'étanchéité (114) est constitué d'un matériau fibreux résistant à la chaleur, d'un matériau en caoutchouc résistant à la chaleur ou d'un métal.

10. Débitmètre à ultrasons selon l'une quelconque des revendications précédentes, où le moyen d'étanchéité (114) dans une zone d'étanchéité est une pièce reliant la conduite d'écoulement (104) à la cartouche de transducteur (112).

11. Débitmètre à ultrasons selon l'une quelconque des revendications précédentes, où une partie principale du moyen d'étanchéité (114) est située entre une surface essentiellement plane (142) de la cartouche de transducteur (112) et une surface de montage essentiellement plane (116) de la conduite d'écoulement (104).

12. Débitmètre à ultrasons selon l'une quelconque des revendications précédentes, où un système d'étanchéité situé entre la conduite d'écoulement (104) et les une ou plusieurs cartouches de transducteur (112) est uniquement constitué d'un type de système d'étanchéité tel que décrit aux revendications 1 à 12.

13. Débitmètre à ultrasons selon l'une quelconque des revendications précédentes, où le moyen d'étanchéité (114) possède une surface d'étanchéité qui, vue en coupe, possède au moins une partie comprise dans le groupe suivant : légèrement concave, légèrement convexe, essentiellement plate, essentiellement plane, carrée ou rectangulaire.

14. Méthode de fourniture d'un débitmètre de consommation étanche aux fluides, le débitmètre comprenant
- une conduite d'écoulement (104) destinée à recevoir un écoulement de fluide, la conduite d'écoulement comprenant une entrée de fluide (106) et une sortie de fluide (108), et où l'écoulement de fluide dans la conduite d'écoulement crée une pression dans la conduite d'écoulement, la conduite d'écoulement comprenant en outre un ou plusieurs trous de montage (110) pour monter une ou plusieurs cartouches de transducteur (112),
- une ou plusieurs cartouches de transducteur placées dans les un ou plusieurs trous de montage de manière à permettre une mesure de l'écoulement de fluide entre l'entrée de fluide (106) et la sortie de fluide (108) dans la conduite d'écoulement,
- un moyen d'étanchéité (114) situé dans les un ou plusieurs trous de montage, où la conduite d'écoulement est munie d'une surface de montage (116) au niveau de chacun des un ou plusieurs trous de montage, où la méthode comprend
- montage du moyen d'étanchéité sur la surface de montage (116) ou sur une surface d'appui (142) de la cartouche de transducteur,
- montage de la cartouche de transducteur (112) de manière à ce que toute pression dans la conduite d'écoulement presse la cartouche de transducteur vers le moyen d'étanchéité, le moyen d'étanchéité étant ainsi pressé vers la surface de montage, et
- précontrainte de la cartouche de transducteur vers le moyen d'étanchéité et la surface de montage par un moyen de retenue souple (122).
